# EUROPÄISCHE PATENTSCHRIFT

(11) **EP 1 588 910 B1**
(45) Veröffentlichungstag und Bekanntmachung des Hinweises auf die Patenterteilung: **14.03.2012**
(21) Anmeldenummer: 05007490.5
(22) Anmeldetag: 06.04.2005
(51) Int. Cl.: B60T 8/1755

(54) **Verfahren zur Analyse und Regelung der Fahrdynamik eines Kraftfahrzeugs sowie Kraftfahrzeug zur Durchführung des Verfahrens**
Method for vehicle dynamics analysis and vehicle dynamics control as well as vehicle for carrying out the method
Procédé pour l'analyse et le réglage de la dynamique de marche d'un véhicule automobile et véhicule pour la mise en oeuvre de ce procédé

(30) Priorität: 23.04.2004 DE 102004019832
(43) Veröffentlichungstag der Anmeldung: 26.10.2005
(73) Patentinhaber: AUDI AG, 85045 Ingolstadt (DE)
(72) Erfinder: Riedel, Helmut, Dr., 86697 Oberhausen (DE); Buschardt, Boris, Dr., 85049 Ingolstadt (DE); Grünleitner, Holger, Dr., 85049 Ingolstadt (DE)
(74) Vertreter: Thielmann, Frank

(56) Entgegenhaltungen:
- EP-A- 0 945 319
- EP-A- 1 075 992
- EP-A- 1 239 355
- DE-A1- 10 127 619
- DE-A1- 10 204 128
- PATENT ABSTRACTS OF JAPAN Bd. 017, Nr. 412 (P-1583), 30. Juli 1993 (1993-07-30) & JP 05 079850 A (HITACHI LTD; others: 01), 30. März 1993 (1993-03-30)

## Beschreibung

Die Erfindung betrifft ein Verfahren zur Analyse und Regelung der Fahrdynamik eines Kraftfahrzeugs, wozu mehrere ein Maß für die aktuelle Fahrsituation darstellende Informationen aufgenommen und im Rahmen einer Analyse ausgewertet werden, wobei die Regelung in Abhängigkeit des Analyseergebnisses erfolgt, und wobei mit einem Bildaufnahmemittel das Fahrzeugumfeld aufgenommen wird und anhand der Bilddaten wenigstens eine ein Maß für die aktuelle Fahrsituation darstellende Information ermittelt wird, die zusammen mit den weiteren Informationen im Rahmen der Analyse zur Ermittlung des Analyseergebnisses ausgewertet wird.

Die heute üblichen Verfahren zur Analyse und Regelung der Fahrdynamik nutzen neben Raddrehzahlsensoren Beschleunigungssensoren und Drehratensensoren. Die Messprinzipien, auf denen die im Serieneinsatz befindlichen Drehraten- und Beschleunigungssensoren beruhen, ermöglichen nur eine vergleichsweise ungenaue Ermittlung der Zustandsgrößen. Dies ist darin begründet, dass hochauflösende genaue Beschleunigungs- und Drehratensensoren wie z.B. Kreiselplattformen zu aufwendig und teuer für eine Serienlösung sind. Eine für die Fahrdynamikregelung besonders wichtige Zustandsgröße ist der Schwimmwinkel, der mit den derzeit üblichen Sensoren nicht direkt gemessen werden kann. Deshalb erfolgt bei Kraftfahrzeugen aus Serienproduktion in der Regel nur eine relativ ungenaue und fehlerbehaftete Schätzung des Schwimmwinkels. Daneben gibt es spezielle Fahrsituationen, wie z.B. eine gleichförmige seitliche Drift auf regennasser oder eisglatter Fahrbahn, bei denen mit heutigen Verfahren vor allem auf Grund der unzureichenden Sensorik keine ausreichende Analyse und Regelung der Fahrdynamik durchführbar ist.

EP 1 075 992 A2 beschreibt ein Kraftfahrzeug der eingangs genannten Art. Vorgesehen ist eine Stabilitätsregelungsvorrichtung für ein Kraftfahrzeug mit Hinderniserkennung und automatischer Bremssteuerungsvorrichtung. Diese soll das sichere Fortkommen des Kraftfahrzeugs ohne Eingriff des Fahrers sicherstellen, für den Fall, dass die Gefahr der Kollision mit einem Hindernis besteht. Hierzu sind Bildaufnahmemittel in Form von Kameras vorgesehen, die das Fahrzeugumfeld aufnehmen. Aus den Bilddaten wird eine ein Maß für die aktuelle Fahrsituation darstellenden Information ermittelt und zusammen mit weiteren Informationen ausgewertet.

Der Erfindung liegt somit das Problem zugrunde, ein Verfahren anzugeben, das eine bessere Analyse und in der Folge eine differenzierte Regelung der Fahrdynamik ermöglicht.

Zur Lösung dieses Problems ist bei einem Verfahren mit den eingangs genannten Merkmalen erfindungsgemäß vorgesehen, dass ein Vergleich der Bilddaten und/oder der wenigstens einen anhand der Bilddaten ermittelten Information mit Solldaten und/oder Sollwerten durchgeführt wird und die Fahrdynamikregelung in Abhängigkeit des Vergleichsergebnisses erfolgt, wobei die Solldaten und/oder Sollwerte aus dem Fahrerwunsch, insbesondere der Gaspedal-, Bremspedal- und Lenkradstellung abgeleitet werden und die Fahrdynamikregelung in Abhängigkeit verschiedener seitens des Fahrers veränderbarer Einstellungen erfolgt, wobei insbesondere eine Einstellung für sicherheitsbetontes und/oder sportliches Fahren vorgesehen sein kann.

Es werden also nicht nur die bisher üblichen ein Maß für die aktuelle Fahrsituation darstellenden Informationen ermittelt und ausgewertet, sondern darüber hinaus wird aus Bilddaten wenigstens eine weitere Information ermittelt. Damit arbeitet das Verfahren nach einem ähnlichen Prinzip, wie es die Natur für die Bewegung von Tieren und Menschen vorgesehen hat, die neben ihrem Tast- und Gleichgewichtssinn ebenso optische Informationen zur Bewegung heranziehen und verarbeiten. Aus den Bilddaten können bisher nicht ermittelbare Informationen zur Fahrsituation bestimmt werden, oder aber es werden Informationen auf eine andere Art und Weise bestimmt, so dass sich eine zur Kontrolle und Plausibilisierung nützliche Redundanz ergibt.

Die Erfindung sieht vor, dass ein Vergleich der Bilddaten und/oder der wenigstens einen anhand der Bilddaten ermittelten Information mit Solldaten und/oder Sollwerten durchgeführt wird und die Fahrdynamikregelung in Abhängigkeit des Vergleichsergebnisses erfolgt. Solche Solldaten und/oder Sollwerte können dabei für Standardsituationen z.B. in einer möglichen Speichereinheit hinterlegt sein. In der Regel ist es jedoch zweckmäßig, die Solldaten und/oder Sollwerte aus dem Fahrerwunsch, dabei insbesondere aus der Gaspedal-, Bremspedal- und Lenkradstellung abzuleiten. Die Ableitung des Fahrerwunsches erfolgt dabei wieder mittels verschiedener Sensoren. Wird aus der oder den aus Bilddaten gewonnenen Informationen eine vom Fahrerwunsch abweichende Bewegung des Fahrzeugs ermittelt, so kann die Diskrepanz als Regelgröße für eine Fahrdynamikregelung herangezogen werden. Z.B. eine Abweichung der Lenkradstellung, die die gewünschte Fahrrichtung widerspiegelt, von der tatsächlichen Bewegungsrichtung des Fahrzeugs kann für einen die Fahrdynamik stabilisierenden Eingriff in den Antrieb, die Bremsen oder die Lenkung des Fahrzeugs verwendet werden.

Zur Anpassung an verschiedene Fahrsituationen oder Fahrer ist es erfindungsgemäß vorgesehen, dass die Fahrdynamikregelung in Abhängigkeit verschiedener seitens des Fahrers veränderbarer Einstellungen erfolgt, wobei insbesondere eine Einstellung für sicherheitsbetontes und/oder sportliches Fahren vorgesehen sein kann. Auch weitere Abstufungen der Einstellungen sind denkbar.

In einer Ausgestaltung der Erfindung ist vorgesehen, dass basierend auf der wenigstens einen aus Bilddaten gewonnenen Information die Translation und/oder die Rotation des Kraftfahrzeugs bezüglich eines ruhenden Bezugssystems bestimmt werden. Die Translation und Rotation können dabei für bestimmte ausgezeichnete Punkte des Kraftfahrzeugs, z.B. für den Schwerpunkt, oder aber für bestimmte Achsen, z.B. die Fahrzeuglängsachse, angegeben werden. Alternativ oder in Ergänzung dazu ist vorgesehen, dass basierend auf der wenigstens einen aus Bilddaten gewonnenen Information wenigstens ein Geschwindigkeitsvektor und/oder Beschleunigungsvektor und/oder ein Winkelgeschwindigkeitsvektor und/oder ein Winkelbeschleunigungsvektor für das Kraftfahrzeug bezüglich eines ruhenden Bezugssystems bestimmt werden. Als ruhendes Bezugssystem bietet sich wiederum das Fahrzeugumfeld an, die Geschwindigkeits- und/oder Beschleunigungsvektoren werden zweckmäßigerweise für spezielle Punkte des Kraftfahrzeugs oder entlang der Längs- oder Querachse angegeben. Da Geschwindigkeits-und Beschleunigungswerte auch im Rahmen bisher üblicher Fahrdynamikanalysen bestimmt werden, lässt sich mit dem erfindungsgemäßen Verfahren eine nützliche Redundanz erhalten. Es kann z.B. ein Vergleich der mit der üblichen Sensorik ermittelten Werte mit den auf Bilddaten basierenden Werten durchgeführt werden, so dass eine Optimierung möglich ist und fehlerhafte Werte mit einer größeren Wahrscheinlichkeit erkannt werden. Dadurch erhöht sich die Fahrsicherheit in Grenzsituationen des Alltagsverkehrs, aber auch für sportliches Fahren.

Eine weitere Ausgestaltung der Erfindung sieht vor, dass basierend auf der wenigstens einen aus Bilddaten gewonnenen Information der Schwimmwinkel und/oder der Gierwinkel und/oder die Giergeschwindigkeit und/oder der Wankwinkel bestimmt werden. Bezüglich Gierwinkel und/oder Giergeschwindigkeit ist somit wiederum eine Redundanz der Werte möglich, alternativ kann natürlich auch überlegt werden, einzelne bisher übliche Fahrdynamiksensoren einzusparen. Die bildgestützte Bestimmung des Schwimmwinkels ist zuverlässig und kostengünstig und ersetzt die bisherige ungenaue und fehlerbehaftete Schätzung dieser Größe. Außerdem kann der Wankwinkel bestimmt werden, der eine Rolle spielt, wenn das Fahrzeug relativ schnell enge Kurven durchfährt, z.B. auf einer Autobahnausfahrt.

Weiterhin ist erfindungsgemäß vorgesehen, dass als Bildaufnahmemittel wenigstens eine Kamera verwendet wird. Dies kann beispielsweise eine schon im Fahrzeug vorhandene Kamera sein, die Teil eines anderen Fahrerassistenzsystems ist, z.B. eines Spurhalte- oder Abstandshaltesystems. Alternativ sind kompliziertere Bildaufnahmesysteme denkbar, die z.B. das Fahrzeugumfeld dreidimensional erfassen. Die Verwendung mehrerer Kameras mit unterschiedlich ausgerichteten optischen Achsen kann ebenfalls sinnvoll sein. Die Bilddaten können erfindungsgemäß kontinuierlich oder mit wählbarem Bildtakt ermittelt werden. Dabei ist es zweckmäßig, wenn eine fahrzeugseitige Steuerungs- und Verarbeitungseinrichtung die Bilddaten analysiert und/oder das wenigstens eine Bildaufnahmemittel steuert.

Das erfindungsgemäße Verfahren kann im Rahmen eines elektronischen Stabilitätsprogramms (ESP) durchgeführt werden, wobei dann lediglich einige Ergänzungen eines bereits vorhandenen ESP-Systems nötig sind. Natürlich kann das Verfahren ebenso auf andere bereits übliche Fahrdynamiksysteme aufgesetzt werden.

Neben dem erfindungsgemäßen Verfahren betrifft die Erfindung ferner ein Kraftfahrzeug umfassend eine Vorrichtung zur Analyse und Regelung der Fahrdynamik umfassend Mittel zur Aufnahme mehrerer ein Maß für die aktuelle Fahrsituation darstellender Informationen und eine Steuerungs- und Verarbeitungseinrichtung zur Auswertung der Informationen im Rahmen einer Analyse, wobei die Steuerungs- und Verarbeitungseinrichtung zur Regelung in Abhängigkeit des Analyseergebnisses ausgebildet ist, wobei der Steuerungs-und Verarbeitungseinrichtung Bildaufnahmemittel zur Aufnahme von Bildern des Fahrzeugumfelds sowie eine Einrichtung zur Ermittlung wenigstens einer ein Maß für die aktuelle Fahrsituation darstellenden Information aus den Bilddaten zugeordnet sind, wobei die Steuerungs- und Verarbeitungseinrichtung zur Auswertung der wenigstens einen Information zusammen mit den weiteren Informationen im Rahmen der Analyse zur Ermittlung des Analyseergebnisses ausgebildet ist. Das Kraftfahrzeug zeichnet sich dadurch aus, dass die Steuerungs- und Verarbeitungseinrichtung zum Vergleich der Bilddaten und/oder der wenigstens einen anhand der Bilddaten ermittelten Information mit Solldaten und/oder Sollwerten und zur Fahrdynamikregelung in Abhängigkeit des Vergleichsergebnisses ausgebildet ist, wobei die Steuerungs- und Verarbeitungseinrichtung Mittel zur Bestimmung der Solldaten und/oder Sollwerte aus dem Fahrerwunsch, insbesondere der Gaspedal-, Bremspedal- und Lenkradstellung umfasst, und der Steuerungs- und Verarbeitungseinrichtung eine Vorrichtung zur Einstellung der Fahrdynamikregelung durch den Fahrer zugeordnet ist, die insbesondere eine Einstellung für sicherheitsbetontes und/oder sportliches Fahren aufweisen kann, wobei die Steuerungs- und Verarbeitungseinrichtung zur Auswertung der jeweils gewählten Einstellung ausgebildet ist.

Erfindungsgemäß kann die Einrichtung zur Ermittlung wenigstens einer aus Bilddaten gewonnenen Information zur Bestimmung der Translation und/oder Rotation des Fahrzeugs relativ zu einem ruhenden Bezugssystem basierend auf der wenigstens einen aus Bilddaten gewonnen Information ausgebildet sein. Außerdem oder alternativ kann die Einrichtung zur Bestimmung wenigstens eines Geschwindigkeitsvektors und/oder Beschleunigungsvektors und/oder eines Winkelgeschwindigkeitsvektors und/oder eines Winkelbeschleunigungsvektors für das Fahrzeug bezüglich eines ruhenden Bezugssystems basierend auf der wenigstens einen aus Bilddaten gewonnenen Information ausgebildet sein. Ein ruhendes Bezugssystem ist beispielsweise das aufgenommene Fahrzeugumfeld, die Vektoren und sonstigen Werte können wiederum für ausgezeichnete Punkte oder Achsen des Fahrzeugs bestimmt werden.

Wegen der Bedeutung insbesondere des Schwimmwinkels ist es zweckmäßig, dass die Einrichtung zur Ermittlung wenigstens einer aus Bilddaten gewonnenen Information zur Bestimmung des Schwimmwinkels und/oder des Gierwinkels und/oder der Giergeschwindigkeit und/oder des Wankwinkels basierend auf der wenigstens einen bildgestützten Information ausgebildet ist.

Die Bildaufnahmemittel umfassen erfindungsgemäß wenigstens eine Kamera und können zur kontinuierlichen Aufnahme der Bilddaten oder zur Aufnahme der Bilddaten mit wählbarem Bildtakt ausgebildet sein. Die Steuerungs- und Verarbeitungseinrichtung ist zur Bilddatenanalyse und/oder zur Steuerung der Bildaufnahmemittel ausgebildet. Um eine fundierte Regelung der Fahrdynamik zu ermöglichen, ist es zweckmäßig, dass die Steuerungs- und Verarbeitungseinrichtung zum Vergleich der Bilddaten und/oder der wenigstens einen anhand der Bilddaten ermittelten Information mit Solldaten und/oder Sollwerten und zur Fahrdynamikregelung in Abhängigkeit des Vergleichsergebnisses ausgebildet ist. Besonders wichtig ist dabei der Fahrerwunsch, so dass erfindungsgemäß vorgesehen ist, dass die Steuerungs- und Verarbeitungseinrichtung Mittel zur Bestimmung der Solldaten und/oder Sollwerte aus dem Fahrerwunsch, insbesondere der Gaspedal-, Bremspedal- und Lenkradstellung umfasst.

Der Steuerungs- und Verarbeitungseinrichtung ist ferner eine Vorrichtung zur Einstellung der Fahrdynamikregelung durch den Fahrer zugeordnet, welche insbesondere eine Einstellung für sicherheitsbetontes und/oder sportliches Fahren aufweisen kann, wobei die Steuerungs- und Verarbeitungseinrichtung zur Auswertung der jeweils gewählten Einstellung ausgebildet ist. Ebenso ist es denkbar, dass anhand der aus Bilddaten gewonnenen Informationen ermittelt wird, ob es beispielsweise regnet oder reger Verkehr herrscht, woraufhin eine entsprechend ausgebildete Steuerungs- und Verarbeitungseinrichtung eine Einstellungsempfehlung an den Fahrer ausgeben kann.

Die Bildaufnahmemittel, die Einrichtung zur Ermittlung wenigstens einer aus Bilddaten gewonnenen Information und die Steuerungs- und Verarbeitungseinrichtung können als Teil eines ESP-Systems ausgebildet sein. Es ist auch möglich, nur einzelne Bestandteile, beispielsweise die Steuerungs- und Verarbeitungseinrichtung, in das ESP-System aufzunehmen. An die Stelle des ESP-Systems können selbstverständlich weitere heute übliche Fahrdynamiksysteme treten.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: ein Flussdiagramm des erfindungsgemäßen Verfahrens zur Fahrdynamikanalyse und -regelung,
- Fig. 2: eine Prinzipskizze eines erfindungsgemäßen Kraftfahrzeugs in einer Fahrsituation mit gleichförmiger seitlicher Drift, und
- Fig. 3: eine Skizze eines erfindungsgemäßen Kraftfahrzeugs bei einer Kurvenfahrt.

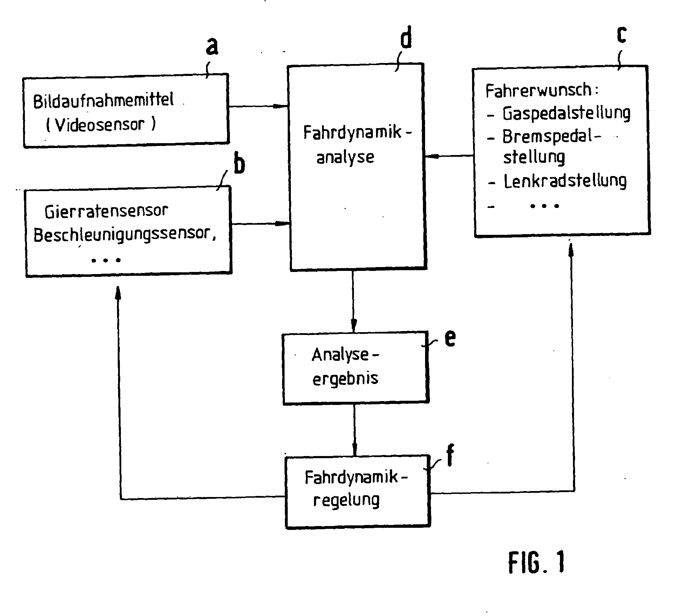

Fig. 1 zeigt ein Flussdiagramm des erfindungsgemäßen Verfahrens zur Analyse und Regelung der Fahrdynamik. Die Kästchen a, b und c symbolisieren dabei die im Wesentlichen parallel stattfindende Aufnahme verschiedener Daten sowie die Ermittlung verschiedener ein Maß für die aktuelle Fahrsituation darstellender Informationen aus diesen Daten. Im Schritt a wird durch ein Bildaufnahmemittel, z.B. einen Videosensor, das Fahrzeugumfeld aufgenommen. Aus den Bilddaten können Informationen über die aktuelle Fahrsituation gewonnen werden. Im parallel dazu stattfindenden Schritt b werden z.B. mit Hilfe von Gierratensensoren oder Beschleunigungssensoren weitere aktuelle Informationen ermittelt. Auf der anderen Seite steht der Schritt c, bei dem z.B. mit der Gaspedal-, Bremspedal- und Lenkradstellung der sogenannte Fahrerwunsch abgeleitet wird. Die aufgenommenen Daten und Informationen der Schritte a, b und c fließen in die Fahrdynamikanalyse d. Im Rahmen dieser Analyse werden z.B. aus a und b Geschwindigkeits- und Beschleunigungsvektoren ermittelt. Die ermittelten Vektoren können anschließend auf Unterschiede verglichen werden. Basierend auf der aus Bilddaten gewonnenen Information aus a ist es möglich, den Schwimmwinkel und/oder den Wankwinkel sowie weitere Größen zu bestimmen. Aus c werden zum Vergleich verschiedene Solldaten und/oder Sollwerte abgeleitet. Weitere Sollwerte können im Rahmen des Verfahrens aus einer möglichen Speichereinrichtung, die hier nicht dargestellt ist, gewonnen werden. Im Schritt d wird mit den Eingangsgrößen aus a, b und c die Fahrdynamik des Fahrzeugs analysiert und im Schritt e ein Analyseergebnis gebildet. Im nachfolgenden Schritt f kann dann eine entsprechende Fahrdynamikregelung, beispielsweise ein Bremseingriff, eine Steuerung des Motors, eine Steuerung der Kraftverteilung auf die Antriebsräder, eine Steuerung des Getriebes sowie eine Steuerung der Lenkung über Lenkmomente oder Lenkwinkel durchgeführt werden. Eine erneute Bestimmung der Daten und aktuellen Informationen in den Schritten a, b und c sowie eine nachfolgende Analyse spiegelt den Erfolg der Regelung wider und erlaubt entsprechende Korrekturen. Dieser Regelungsprozess kann sich kontinuierlich wiederholen.

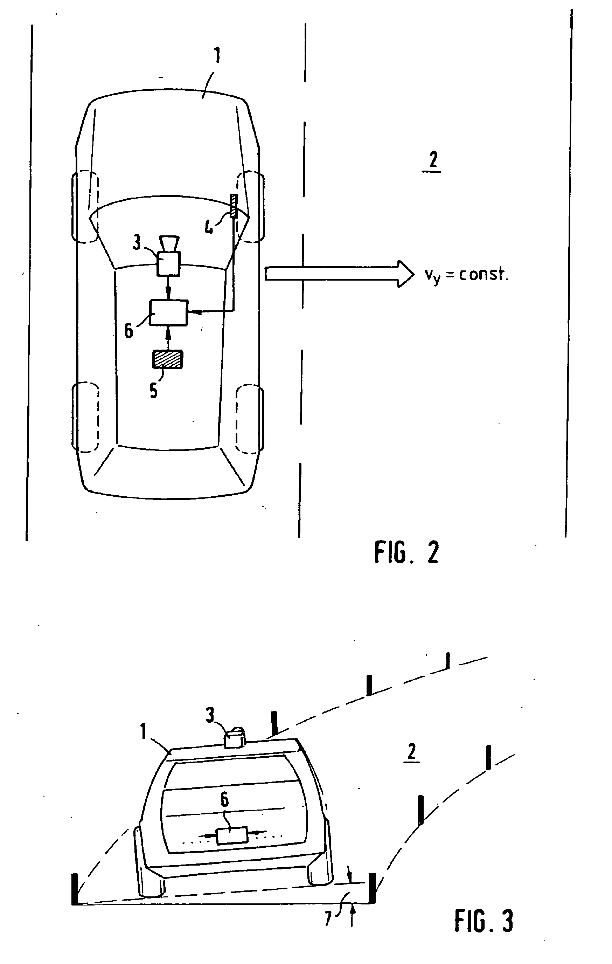

In Fig. 2 ist eine Prinzipskizze eines erfindungsgemäßen Kraftfahrzeugs in einer Fahrsituation mit gleichförmiger seitlicher Drift dargestellt. Das Kraftfahrzeug 1 befindet sich in der dargestellten Situation auf einer Straße 2 und befährt augenblicklich die linke Spur. In das Kraftfahrzeug ist eine Kamera 3 eingebaut, die als Bildaufnahmemittel dient und deren optische Achse im dargestellten Fall der Längsachse des Kraftfahrzeugs entspricht. Alternativ oder in Ergänzung dazu sind Kameras denkbar, die nach unten gerichtet am Unterboden eingebaut sind, oder nach unten gerichtet am oder im Außenspiegel vorhanden sind oder die schräg nach hinten-unten gerichtet beispielsweise im Bereich der hinteren Nummernschildbeleuchtung oberhalb des Nummernschilds angebracht sind, wobei dann eine ohnehin schon vorhandene Rückfahrkamera benutzt werden kann. Weiterhin sind ein Raddrehzahlsensor 4 sowie ein Gierratensensor 5 skizziert, über die ebenso wie über die Kamera Daten und Informationen aufgenommen werden, die einer Steuerungs- und Verarbeitungseinrichtung 6 zur Auswertung zufließen. Das dargestellte Fahrzeug befindet sich in einer Situation, in der es ohne Beschleunigung, also mit konstanter Geschwindigkeit v_{y}, driftet, ohne sich dabei zu drehen. Eine solche Situation kann bei einer eisglatten Fahrbahn auftreten. Herkömmliche Fahrdynamiksysteme erkennen diese Situation nicht, da weder eine Querbeschleunigung noch eine Drehung des Fahrzeugs gegeben sind. Über die aus Bilddaten gewonnenen Informationen, die die Kamera 3 liefert, kann jedoch die seitliche Drift mit konstanter Geschwindigkeit korrekt erkannt werden, so dass über die Steuerungs- und Verarbeitungseinrichtung 6 eine angemessene Regelung möglich ist.

Fig. 3 zeigt eine Skizze eines erfindungsgemäßen Kraftfahrzeugs bei einer Kurvenfahrt. Das Kraftfahrzeug 1 verfügt wiederum über eine Kamera 3, alternativ sind natürlich andere Bildaufnahmemittel ebenso denkbar. Neben den Bilddaten und aus Bilddaten gewonnenen Informationen der Kamera 3 fließen der Steuerungs- und Verarbeitungseinrichtung 6 ebenso weitere Daten und Informationen zu, die hier durch Pünktchen mit entsprechenden Pfeilen symbolisiert sind. Bei der Fahrbahn 2 kann es sich z.B. um eine Autobahnausfahrt handeln, bei der besonders die Gefahr besteht, dass zu schnell in die Kurve gefahren wird. Das Fahrzeug 1 neigt sich in diesem Fall zu einer Seite, die Räder auf der anderen Seite der Kurve können sich unter Umständen etwas vom Boden abheben, hier durch den Winkel 7 angedeutet. Auch diese gefährliche Situation wird mit herkömmlichen Fahrdynamikanalysen und Regelungssystemen nicht richtig erkannt. Über eine oder mehrere Kameras und/oder die Definition eines künstlichen Horizonts lässt sich allerdings das Wanken des Fahrzeugs korrekt analysieren und eine angemessene Regelung ist möglich. Die Fahrdynamik wird verlässlicher erkannt, und einige "Defizite" bei bisherigen Kraftfahrzeugen mit Fahrdynamiksystemen werden beseitigt.

## Patentansprüche

1. Verfahren zur Analyse und Regelung der Fahrdynamik eines Kraftfahrzeugs, wozu mehrere ein Maß für die aktuelle Fahrsituation darstellende Informationen aufgenommen und im Rahmen einer Analyse ausgewertet werden, wobei die Regelung in Abhängigkeit des Analyseergebnisses erfolgt, und wobei mit einem Bildaufnahmemittel das Fahrzeugumfeld aufgenommen wird und anhand der Bilddaten wenigstens eine ein Maß für die aktuelle Fahrsituation darstellende Information ermittelt wird, die zusammen mit den weiteren Informationen im Rahmen der Analyse zur Ermittlung des Analyseergebnisses ausgewertet wird,
**dadurch gekennzeichnet,**
**dass** ein Vergleich der Bilddaten und/oder der wenigstens einen anhand der Bilddaten ermittelten Information mit Solldaten und/oder Sollwerten durchgeführt wird und die Fahrdynamikregelung in Abhängigkeit des Vergleichsergebnisses erfolgt, wobei die Solldaten und/oder Sollwerte aus dem Fahrerwunsch, insbesondere der Gaspedal-, Bremspedal- und Lenkradstellung abgeleitet werden und die Fahrdynamikregelung in Abhängigkeit verschiedener seitens des Fahrers veränderbarer Einstellungen erfolgt, wobei insbesondere eine Einstellung für sicherheitsbetontes und/oder sportliches Fahren vorgesehen sein kann.

2. Verfahren nach Anspruch 1,
**dadurch gekennzeichnet,**
**dass** basierend auf der wenigstens einen aus Bilddaten gewonnenen Information die Translation und/oder die Rotation des Kraftfahrzeugs bezüglich eines ruhenden Bezugssystems bestimmt werden.

3. Verfahren nach einem der vorangehenden Ansprüche 1 oder 2, **dadurch gekennzeichnet,**
**dass** basierend auf der wenigstens einen aus Bilddaten gewonnenen Information wenigstens ein Geschwindigkeitsvektor und/oder Beschleunigungsvektor und/oder ein Winkelgeschwindigkeitsvektor und/oder ein Winkelbeschleunigungsvektor für das Kraftfahrzeug bezüglich eines ruhenden Bezugssystems bestimmt werden.

4. Verfahren nach einem der vorangehenden Ansprüche,
**dadurch gekennzeichnet,**
**dass** basierend auf der wenigstens einen aus Bilddaten gewonnenen Information der Schwimmwinkel und/oder der Gierwinkel und/oder die Giergeschwindigkeit und/oder der Wankwinkel bestimmt werden.

5. Verfahren nach einem der vorangehenden Ansprüche,
**dadurch gekennzeichnet,**
**dass** als Bildaufnahmemittel wenigstens eine Kamera verwendet wird.

6. Verfahren nach einem der vorangehenden Ansprüche,
**dadurch gekennzeichnet,**
**dass** die Bilddaten kontinuierlich oder mit wählbarem Bildtakt ermittelt werden.

7. Verfahren nach einem der vorangehenden Ansprüche,
**dadurch gekennzeichnet,**
**dass** eine fahrzeugseitige Steuerungs- und Verarbeitungseinrichtung die Bilddaten analysiert und/oder das wenigstens eine Bildaufnahmemittel steuert.

8. Verfahren nach einem der vorangehenden Ansprüche,
**dadurch gekennzeichnet,**
**dass** das Verfahren im Rahmen eines elektronischen Stabilitätsprogramms durchgeführt wird.

9. Kraftfahrzeug umfassend eine Vorrichtung zur Analyse und Regelung der Fahrdynamik umfassend Mittel zur Aufnahme mehrerer ein Maß für die aktuelle Fahrsituation darstellender Informationen und eine Steuerungs- und Verarbeitungseinrichtung zur Auswertung der Informationen im Rahmen einer Analyse, wobei die Steuerungs- und Verarbeitungseinrichtung zur Regelung in Abhängigkeit des Analyseergebnisses ausgebildet ist, wobei der Steuerungs- und Verarbeitungseinrichtung Bildaufnahmemittel zur Aufnahme von Bildern des Fahrzeugumfelds sowie eine Einrichtung zur Ermittlung wenigstens einer ein Maß für die aktuelle Fahrsituation darstellenden Information aus den Bilddaten zugeordnet sind, wobei die Steuerungs- und Verarbeitungseinrichtung zur Auswertung der wenigstens einen Information zusammen mit den weiteren Informationen im Rahmen der Analyse zur Ermittlung des Analyseergebnisses ausgebildet ist,
**dadurch gekennzeichnet,**
**dass** die Steuerungs- und Verarbeitungseinrichtung (6) zum Vergleich
der Bilddaten und/oder der wenigstens einen anhand der Bilddaten ermittelten Information mit Solldaten und/oder Sollwerten und zur Fahrdynamikregelung in Abhängigkeit des Vergleichsergebnisses ausgebildet ist, wobei die Steuerung- und Verarbeitungseinrichtung (6) Mittel zur Bestimmung der Solldaten und/oder Sollwerte aus dem Fahrerwunsch, insbesondere der Gaspedal-, Bremspedal- und Lenkradstellung umfasst, und der Steuerungs- und Verarbeitungseinrichtung (6) eine Vorrichtung zur Einstellung der Fahrdynamikregelung durch den Fahrer zugeordnet ist, die insbesondere eine Einstellung für sicherheitsbetontes und/oder sportliches Fahren aufweisen kann, wobei die Steuerungs- und Verarbeitungseinrichtung (6) zur Auswertung der jeweils gewählten Einstellung ausgebildet ist.

10. Kraftfahrzeug nach Anspruch 9,
**dadurch gekennzeichnet,**
**dass** die Einrichtung zur Ermittlung wenigstens einer aus Bilddatengewonnenen Information zur Bestimmung der Translation und/oder Rotation des Fahrzeugs relativ zu einem ruhenden Bezugssystem basierend auf der wenigstens einen aus Bilddaten gewonnenen Information ausgebildet ist.

11. Kraftfahrzeug nach einem der Ansprüche 9 oder 10,
**dadurch gekennzeichnet,**
**dass** die Einrichtung zur Ermittlung wenigstens einer aus Bilddaten gewonnerien Information zur Bestimmung wenigstens eines Geschwindigkeitsvektors und/oder Beschleunigungsvektors und/oder Winkelgeschwindigkeitsvektors und/oder Winkelbeschleunigungsvektörs für das Fahrzeug bezüglich eines ruhenden Bezugssystems basierend auf der wenigstens einen aus Bilddaten gewonnenen Information ausgebildet ist.

12. Kraftfahrzeug nach einem der Ansprüche 9 bis 11,
**dadurch gekennzeichnet,**
**dass** die Einrichtung zur Ermittlung wenigstens einer aus Bilddaten gewonnenen Information zur Bestimmung des Schwimmwinkels und/oder des Gierwinkels und/oder der Giergeschwindigkeit und/oder des Wankwinkels basierend auf der wenigstens einen aus Bilddaten gewonnenen Information ausgebildet ist.

13. Kraftfahrzeug nach einem der Ansprüche 9 bis 12,
**dadurch gekennzeichnet,**
**dass** die Bildaufnahmemittel wenigstens eine Kamera (3) umfassen.

14. Kraftfahrzeug nach einem der Ansprüche 9 bis 13,
**dadurch gekennzeichnet,**
**dass** die Bildaufnahmemittel zur kontinuierlichen Aufnahme der Bilddaten oder zur Aufnahme der Bilddaten mit wählbarem Bildtakt ausgebildet sind.

15. Kraftfahrzeug nach einem der Ansprüche 9 bis 14,
**dadurch gekennzeichnet,**
**dass** die Steuerungs- und Verarbeitungseinrichtung (6) zur Bilddatenanalyse und/oder zur Steuerung der Bildaufnahmemittel ausgebildet ist.

16. Kraftfahrzeug nach einem der Ansprüche 9 bis 15,
**dadurch gekennzeichnet,**
**dass** die Bildaufnahmemittel, die Einrichtung zur Ermittlung wenigstens einer aus Bilddaten gewonnenen Information und die Steuerungs- und Verarbeitungseinrichtung (6) als Teil eines ESP-Systems ausgebildet sind.

## Claims

1. Method for analysing and controlling the vehicle dynamics of a motor vehicle, for which purpose a plurality of information items which represent a measure of the current driving situation are recorded and evaluated within the scope of an analysis, wherein the control is carried out as a function of the analysis result, and wherein the surroundings of the vehicle are recorded with an image-recording means and at least one information item which represents a measure of the current driving situation is determined on the basis of the image data, said information item being evaluated together with the further information items within the scope of the analysis in order to determine the analysis result,
**characterized**
**in that** a comparison of the image data and/or of the at least one information item which is determined on the basis of the image data with setpoint data and/or setpoint values is carried out and the vehicle dynamics control is carried out as a function of the comparison result, wherein the setpoint data and/or setpoint values are derived from the driver's request, in particular the position of the accelerator pedal, brake pedal and steering wheel, and the vehicle dynamics control is carried out as a function of various settings which can be varied on the part of the driver, wherein, in particular, a setting can be provided for driving with the emphasis on safety and/or sporty driving.

2. Method according to Claim 1,
**characterized**
**in that** the translation and/or the rotation of the motor vehicle with respect to a quiescent reference system is determined on the basis of the at least one information item acquired from image data.

3. Method according to either of the preceding Claims 1 and 2,
**characterized**
**in that** at least one speed vector and/or acceleration vector and/or one angular speed vector and/or one angular acceleration vector are determined for the motor vehicle with respect to a quiescent reference system on the basis of the at least one information item acquired from image data.

4. Method according to one of the preceding claims, **characterized**
**in that** the slip angle and/or the yaw angle and/or the yaw rate and/or the rolling angle are determined on the basis of the at least one information item acquired from image data.

5. Method according to one of the preceding claims, **characterized**
**in that** at least one camera is used as the image-recording means.

6. Method according to one of the preceding claims, **characterized**
**in that** the image data are determined continuously or with a selectable image cycle.

7. Method according to one of the preceding claims, **characterized**
**in that** a vehicle-side control and processing device analyses the image data and/or controls the at least one image-recording means.

8. Method according to one of the preceding claims, **characterized**
**in that** the method is carried out within the scope of an electronic stability programme.

9. Motor vehicle comprising a device for analysing and controlling the vehicle dynamics, comprising means for recording a plurality of information items which represent a measure of the current driving situation and a control and processing device for evaluating the information items within the scope of an analysis, wherein the control and processing device is designed to control as a function of the analysis result, wherein image-recording means for recording images of the surroundings of the vehicle and a device for determining at least one information item which represents a measure of the current driving situation from the image data are assigned to the control and processing device, wherein the control and processing device is designed to evaluate the at least one information item together with the further information items within the scope of the analysis in order to determine the analysis result,
**characterized**
**in that** the control and processing device (6) is designed to compare the image data and/or the at least one information item which is determined on the basis of the image data with setpoint data and/or setpoint values and to carry out vehicle dynamics control as a function of the comparison result, wherein the control and processing device (6) comprises means for determining the setpoint data and/or setpoint values from the driver's request, in particular the position of the accelerator pedal, brake pedal and steering wheel, and an apparatus for the setting of the vehicle dynamics control by the driver is assigned to the control and processing device (6), which apparatus for setting the vehicle dynamics control can have, in particular, a setting for driving with the emphasis on safety and/or sporty driving, wherein the control and processing device (6) is designed to evaluate the respectively selected setting.

10. Motor vehicle according to Claim 9,
**characterized**
**in that** the device for determining at least one information item acquired from image data is designed to determine the translation and/or rotation of the vehicle relative to a quiescent reference system on the basis of the at least one information item acquired from image data.

11. Motor vehicle according to either of Claims 9 and 10,
**characterized**
**in that** the device for determining at least one information item acquired from image data is designed to determine at least one speed vector and/or acceleration vector and/or angular speed vector and/or angular acceleration vector for the vehicle with respect to a quiescent reference system on the basis of the at least one information item acquired from image data.

12. Motor vehicle according to one of Claims 9 to 11, **characterized**
**in that** the device for determining at least one information item acquired from image data is designed to determine the slip angle and/or the yaw angle and/or the yaw rate and/or the rolling angle on the basis of the at least one information item acquired from image data.

13. Motor vehicle according to one of Claims 9 to 12, **characterized**
**in that** the image-recording means comprise at least one camera (3).

14. Motor vehicle according to one of Claims 9 to 13, **characterized**
**in that** the image-recording means are designed to continuously record the image data or to record the image data with a selectable image cycle.

15. Motor vehicle according to one of Claims 9 to 14, **characterized**
**in that** the control and processing device (6) is designed to analyse image data and/or to control the image-recording means.

16. Motor vehicle according to one of Claims 9 to 15, **characterized**
**in that** the image-recording means, the device for determining at least one information item acquired from image data and the control and processing device (6) are embodied as part of an ESP system.

## Revendications

1. Procédé d'analyse et de régulation de la dynamique de conduite d'un véhicule automobile, plusieurs informations représentant une mesure de la situation de conduite actuelle étant enregistrées et interprétées dans le cadre d'une analyse, la régulation s'effectuant en fonction du résultat de l'analyse et l'environnement du véhicule étant enregistré avec des moyens d'enregistrement d'image et au moins une information représentant une mesure de la situation de conduite actuelle étant déterminée au moyen des données d'image, laquelle est interprétée conjointement avec les autres informations dans le cadre de l'analyse en vue de déterminer le résultat de l'analyse,
**caractérisé en ce**
**qu'**une comparaison des données d'image et/ou de l'au moins une information déterminée au moyen des données d'image avec des données voulues et/ou des valeurs de consigne est effectuée et la régulation de la dynamique de conduite s'effectue en fonction du résultat de la comparaison, les données voulues et/ou les valeurs de consigne étant dérivées du souhait du conducteur, notamment de la position de la pédale d'accélérateur, de la pédale de frein et du volant et la régulation de la dynamique de conduite s'effectuant en fonction de différents réglages pouvant être modifiés au niveau du conducteur, un réglage pour une conduite à caractère sécuritaire et/ou sportive pouvant notamment être prévu.

2. Procédé selon la revendication 1, **caractérisé en ce que** la translation et/ou la rotation du véhicule automobile par rapport à un système de référence au repos sont déterminées en se basant sur l'au moins une information obtenue à partir des données d'image.

3. Procédé selon l'une des revendications précédentes 1 ou 2, **caractérisé en ce qu'**au moins un vecteur de vitesse et/ou un vecteur d'accélération et/ou un vecteur de vitesse angulaire et/ou un vecteur d'accélération angulaire du véhicule automobile par rapport à un système de référence au repos sont déterminés en se basant sur l'au moins une information obtenue à partir des données d'image.

4. Procédé selon l'une des revendications précédentes, **caractérisé en ce que** l'angle de flottement et/ou l'angle de lacet et/ou la vitesse de lacet et/ou l'angle de roulis sont déterminés en se basant sur l'au moins une information obtenue à partir des données d'image.

5. Procédé selon l'une des revendications précédentes, **caractérisé en ce que** les moyens d'enregistrement d'image utilisés sont au moins une caméra.

6. Procédé selon l'une des revendications précédentes, **caractérisé en ce que** les données d'image sont déterminées continuellement ou avec une fréquence d'image sélectionnable.

7. Procédé selon l'une des revendications précédentes, **caractérisé en ce qu'**un dispositif de contrôle et de traitement côté véhicule analyse les données d'image et/ou commande l'au moins un moyen d'enregistrement d'image.

8. Procédé selon l'une des revendications précédentes, **caractérisé en ce que** le procédé est mis en oeuvre dans le cadre d'un programme de stabilité électronique.

9. Véhicule automobile comprenant un dispositif d'analyse et de régulation de la dynamique de conduite incluant des moyens pour enregistrer plusieurs informations représentant une mesure de la situation de conduite actuelle et un dispositif de contrôle et de traitement pour interpréter les informations dans le cadre d'une analyse, le dispositif de contrôle et de traitement étant configuré pour effectuer la régulation en fonction du résultat de l'analyse, des moyens d'enregistrement d'image pour enregistrer des images de l'environnement du véhicule ainsi qu'un dispositif pour déterminer au moins une information représentant une mesure de la situation de conduite actuelle à partir des données d'image étant associés au dispositif de contrôle et de traitement, le dispositif de contrôle et de traitement étant configuré pour interpréter l'au moins une information conjointement avec les autres informations dans le cadre de l'analyse en vue de déterminer le résultat de l'analyse,
**caractérisé en ce**
**que** le dispositif de contrôle et de traitement (6) est configuré pour comparer les données d'image et/ou l'au moins une information déterminée au moyen des données d'image avec des données voulues et/ou des valeurs de consigne et pour effectuer une régulation de la dynamique de conduite en fonction du résultat de la comparaison, le dispositif de contrôle et de traitement (6) incluant des moyens pour déterminer les données voulues et/ou les valeurs de consigne à partir du souhait du conducteur, notamment de la position de la pédale d'accélérateur, de la pédale de frein et du volant, et un dispositif de réglage de la régulation de la dynamique de conduite par le conducteur étant associé au dispositif de contrôle et de traitement (6), lequel peut notamment présenter un réglage pour une conduite à caractère sécuritaire et/ou sportive, le dispositif de contrôle et de traitement (6) étant configuré pour interpréter le réglage respectivement sélectionné.

10. Véhicule automobile selon la revendication 9, **caractérisé en ce que** le dispositif pour déterminer au moins une information obtenue à partir des données d'image est configuré pour déterminer la translation et/ou la rotation du véhicule automobile par rapport à un système de référence au repos en se basant sur l'au moins une information obtenue à partir des données d'image.

11. Véhicule automobile selon l'une des revendications 9 ou 10, **caractérisé en ce que** le dispositif pour déterminer au moins une information obtenue à partir des données d'image est configuré pour déterminer au moins un vecteur de vitesse et/ou un vecteur d'accélération et/ou un vecteur de vitesse angulaire et/ou un vecteur d'accélération angulaire du véhicule par rapport à un système de référence au repos en se basant sur l'au moins une information obtenue à partir des données d'image.

12. Véhicule automobile selon l'une des revendications 9 à 11, **caractérisé en ce que** le dispositif pour déterminer au moins une information obtenue à partir des données d'image est configuré pour déterminer l'angle de flottement et/ou l'angle de lacet et/ou la vitesse de lacet et/ou l'angle de roulis en se basant sur l'au moins une information obtenue à partir des données d'image.

13. Véhicule automobile selon l'une des revendications 9 à 12, **caractérisé en ce que** les moyens d'enregistrement d'image comprennent au moins une caméra (3).

14. Véhicule automobile selon l'une des revendications 9 à 13, **caractérisé en ce que** les moyens d'enregistrement d'image sont configurés pour l'enregistrement en continu des données d'image ou pour l'enregistrement des données d'image avec une fréquence d'image sélectionnable.

15. Véhicule automobile selon l'une des revendications 9 à 14, **caractérisé en ce que** le dispositif de contrôle et de traitement (6) est configuré pour analyser les données d'image et/ou pour commander les moyens d'enregistrement d'image.

16. Véhicule automobile selon l'une des revendications 9 à 15, **caractérisé en ce que** les moyens d'enregistrement d'image, le dispositif pour déterminer au moins une information obtenue à partir des données d'image et le dispositif de contrôle et de traitement (6) sont réalisés sous la forme d'une partie d'un système EPS.
